Europäisches Patentamt

European Patent Office

Office européen des brevets

(19)

(11) Numéro de publication: **0 008 258**
**B1**

(12) **FASCICULE DE BREVET EUROPEEN**

(45) Date de publication du fascicule du brevet: **06.01.82**

(51) Int. Cl.³: **G 06 M 1/00, G 01 C 22/00**

(21) Numéro de dépôt: **79400506.6**

(22) Date de dépôt: **17.07.79**

(54) Perfectionnements aux tachymètres à totalisateurs.

(30) Priorité: **20.07.78 FR 7821522**
**08.12.78 FR 7834701**

(43) Date de publication de la demande:
**20.02.80 Bulletin 80/4**

(45) Mention de la délivrance du brevet:
**06.01.82 Bulletin 82/1**

(84) Etats contractants désignés:
**BE CH DE GB IT NL SE**

(56) Documents cités:
**CH - A - 411 409**
**DE - A - 1 800 181**
**DE - B - 1 104 745**
**FR - A - 1 358 949**
**FR - A - 1 484 416**
**US - A - 1 848 062**

(73) Titulaire: **SOCIETE INTERNATIONALE DE MECANIQUE INDUSTRIELLE S.A.**
**37 rue Notre-Dame**
**Luxembourg (LU)**

(72) Inventeur: **Menager, Jean**
**1, rue Glesener**
**Luxembourg (LU)**

(74) Mandataire: **Bloch, Robert**
**39 avenue de Friedland**
**F-75008 Paris (FR)**

Courier Press, Leamington Spa, England.

Perfectionnements aux tachymètres à totalisateurs

La présente invention concerne un tachymètre à totalisateurs permettant l'affichage de la vitesse d'un véhicule et de la distance parcourue et comprenant un arbre d'entrée entraîné à une vitesse proportionnelle à celle du véhicule, un ensemble tachymétrique relié à l'arbre d'entrée et un bloc totalisateur général constitué par une pluralité de tambours gradués montés côte à côte sur un axe commun et entraînés à partir de l'arbre d'entrée.

Dans les tachymètres de ce type, le bloc totalisateur est supporté en rotation dans un bâti qui comprend deux parois parallèles munies d'évidements qui reçoivent les extrémités des axes des tambours. D'autre part, le bloc totalisateur comprend des éléments intérieurs qui doivent être immobilisés en rotation et qui se prolongent par des ergots d'arrêt formant saillie par rapport aux tambours.

De façon classique, des évidements respectifs sont formés dans le bâti, pour recevoir les ergots d'arrêt.

C'est ainsi que, dans le brevet CH—A—411 409 est décrit un compteur totalisateur dont les tambours et les joues intercalaires sont montés sur un axe porté par un bâti-support, en forme d'étrier, dont le fond est muni d'une mortaise dans laquelle viennent se loger les doigts aménagés à la périphérie de chacune des joues.

Dans ce type de tachymètre, on voit que l'opération de montage, consistant à engager les doigts dans la mortaise, exige un parfait alignement des doigts et leur introduction simultanée dans la mortaise par déplacement précis en translation du groupe de tambours.

Une telle opération doit nécessairement être effectuée manuellement.

L'invention vise par conséquent un tachymètre du type indiqué, dans lequel le montage du bloc totalisateur est très simplifié et peut être réalisé par une machine automatique.

A cet effet, selon l'invention, le bâti comporte une barrette s'étendant entre les dites parois parallèlement à l'axe des tambours, et formant butée pour les ergots d'arrêt en saillie, et à la barrette est associé un élément de verrouillage pour immobiliser les ergots d'arrêt dans leur position de butée, lequel élément est monté à force dans des évidements formés dans les dites parois du bâti, ce montage à force étant connu en soi par le brevet FR—A—1 484 416.

Le montage du bloc totalisateur est alors très simple. Lorsqu'on engage les extrémités de l'axe des tambours dans les évidements correspondants du bâti, tous les ergots en saillie viennent en butée sur la barrette. Il suffit ensuite de mettre en place la tige de verrouillage pour immobiliser tous les ergots dans la position angulaire appropriée. Ces deux phases de montage consistent — le bâti étant supposé fixe — en des mouvements de translation effectués successivement par le bloc totalisateur et par la tige de verrouillage. Il s'agit là d'opérations qu'il est facile d'automatiser. L'invention sera bien comprise à la lecture de la description suivante, faite en se référant aux dessins annexés.

Dans les dessins:
— la figure 1 est une vue en perspective éclatée du tachymètre à totalisateurs selon l'invention dans une première forme de réalisation;
— la figure 2 est une vue à plus grande échelle d'un élément du tachymètre de la figure 1;
— la figure 3 est une vue schématique à grande échelle de l'ensemble totalisateur monté, dont la moitié seulement est représentée.

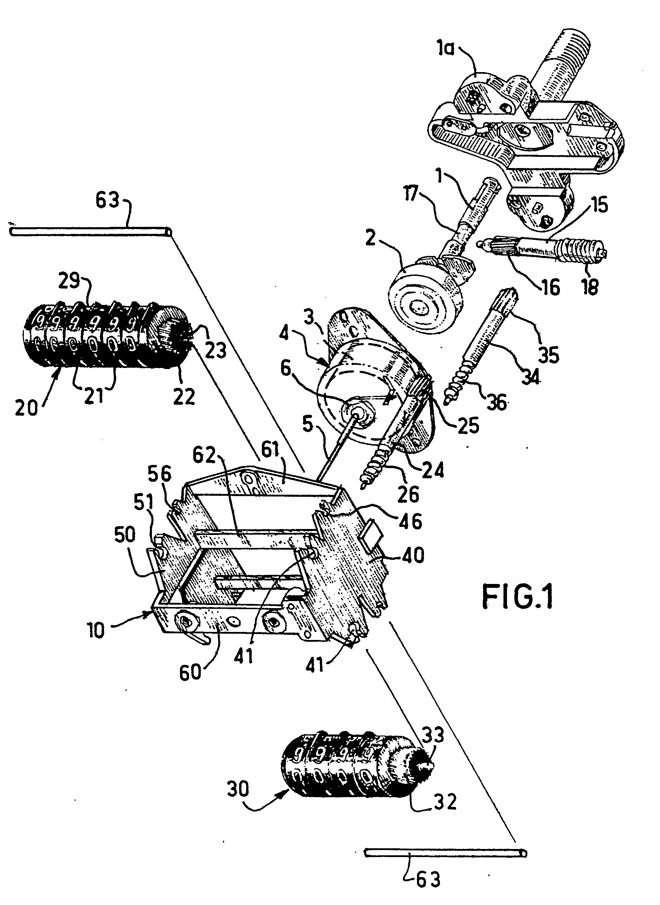

Le tachymètre à totalisateurs représenté à la figure 1 comprend essentiellement un flexible d'entrée, non représenté ici, qui tourne à une vitesse proportionnelle à la vitesse du véhicule portant l'appareil, un ensemble tachymétrique pour afficher la vitesse du véhicule et un ensemble totalisateur pour afficher la distance parcourue par le véhicule.

L'ensemble tachymétrique est un dispositif fonctionnant par courants de Foucault et se compose d'un arbre d'entrée 1 solidaire en rotation du flexible précité, d'un corps de compteur 1a, d'un aimant 2 calé sur l'arbre 1, d'une cloche induite 3, d'une pièce de fermeture de champ 4, d'un axe 5 solidaire de la cloche 3 qui traverse la pièce 4, et qui entraîne l'aiguille du compteur de vitesse, non représentée ici, et d'un ressort spiral 6 monté sur une collerette 7 solidaire de l'axe 5.

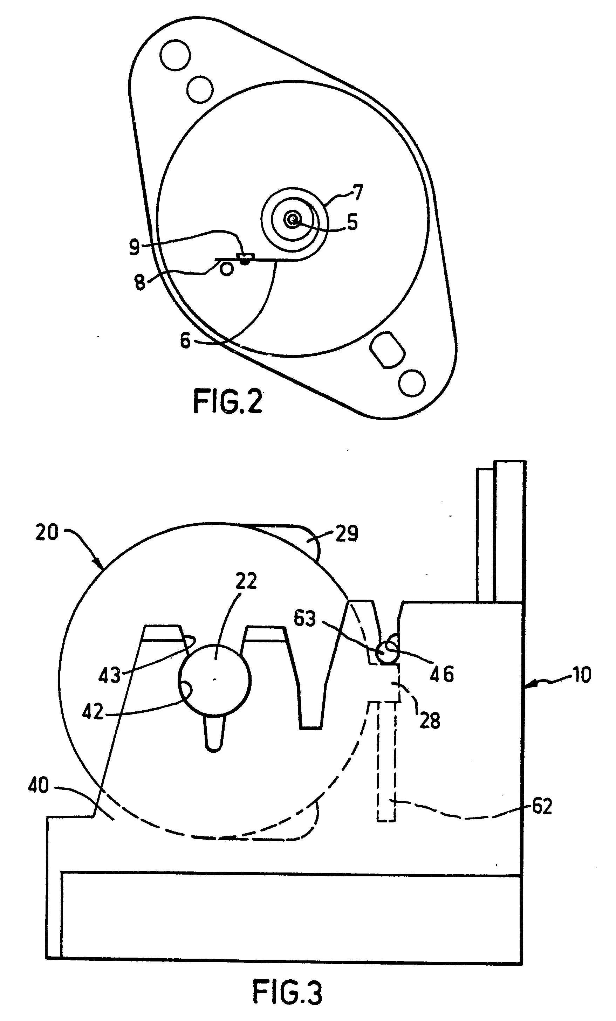

Le rôle du spiral 6, qu'on voit mieux à la figure 2, est d'exercer une force de rappel qui s'oppose au mouvement de la cloche 3. Le spiral 6 fonctionne en détorsion, c'est-à-dire que ses spires sont normalement serrées et s'écartent en fonctionnement. Le fonctionnement en détorsion présente les avantages suivants par rapport au fonctionnement classique en torsion, où les spires normalement écartées se resserrent en fonctionnement.

Dans le travail en torsion, le risque existe que les spires entrent en contact en se resserrant, ce qui modifie la force de rappel et peut fausser les indications de lecture. Ce risque n'existe pas dans le travail en détorsion, puisque les spires s'écartent à partir d'une position resserrée.

En second lieu, le montage d'un spiral travaillant en torsion est très délicat et demande une grande habilité manuelle, car il faut s'assurer que les spires sont convenablement décartées. Au contraire, le montage d'un spiral travaillant en détorsion est très simple, comme le montre la figure 2. Il suffit de monter le spiral serré autour de la collerette 7 et de faire reposer l'extrémité 8 du spiral contre une patte d'arrêt 9 et de la souder sur cette patte, par exemple par induction.

En se référant à nouveau à la figure 1 et à la figure 3, l'ensemble totalisateur comprend essentiellement un bâti, désigné dans son ensemble en 10, un bloc totalisateur général 20, un bloc totalisateur partiel 30, celui-ci pouvant être omis, et un ensemble de transmission pour permettre l'entraînement des totalisateurs 20 et 30 à partir de l'arbre d'entrée 1.

L'ensemble de transmission comprend un arbre primaire 15 muni d'une denture 16 qui engrène avec une denture 17 formée sur l'arbre d'entrée 1, et deux arbres secondaires 24 et 34. L'arbre secondaire 24 comporte à une extrémité une denture 25 qui engrène avec une denture 18 formée sur l'arbre primaire 15, et à l'autre extrémité une denture 26 en prise avec un pignon 22 monté en bout du bloc 20. De même, l'arbre secondaire 34 comporte une denture 35 en prise avec la denture 18 et une denture 36 en prise avec un pignon 32 monté en bout du bloc 30.

Le bloc totalisateur 20 comprend de façon classique une pluralité de tambours 21, gradués de 0 à 9, disposés côte à côte autour d'un axe. L'entraînement des tambours est assuré par le pignon 22, l'agencement étant tel que chaque tambour tourne d'une graduation lorsque le tambour précédent (par rapport au pignon 22) fait un tour complet.

Le bloc 30 a une structure identique avec le pignon 32 pour l'entraînement des tambours. L'axe du bloc 20 (resp. 30) a des extrémités en saillie, l'extrémité en saillie par rapport au pignon 22 (resp. 32), qui est seule visible sur la figure 1, étant repérée en 23 (resp. 33).

Le bâti 10 est une pièce moulée en matière plastique qui comprend deux parois terminales parallèles 40, 50 et des éléments transversaux tels que 60, 61 qui relient les parois 40, 50. L'écart entre les parois 40 et 50 est tel que les blocs totalisateurs 20 et 30 puissent se loger entre les parois 40 et 50.

On voit d'autre part, sur la figure 3, que chaque bloc totalisateur comporte de façon classique des ergots d'arrêt 28 (resp. 38) qui font saillie de la périphérie du bloc entre deux tambours adjacents. Les ergots 28 constituent les prolongements visibles d'éléments intérieurs qui portent les pignons intérieurs assurant de façon classique la rotation des tambours et qui, en fonctionnement, doivent rester fixes en rotation. Ces éléments intérieurs sont également visibles par les oreilles 29 servant à faciliter le positionnement angulaire des blocs lors du montage.

Pour la mise en place du bloc totalisateur 20, les parois terminales 40 et 50 comportent des évidements ou cloquages 41, 51 en regard, qui sont conformés pour recevoir à friction les extrémités respectives des axes des tambours des blocs 20 et 30.

La figure 3 montre plus en détail la forme de l'évidement 41, qui comprend une ouverture circulaire 42 adaptée au diamètre de l'axe des tambours, et une encoche 43 plus étroite que l'axe doit forcer pour s'engager dans l'ouverture circulaire 42.

Il est prévu également, pour chaque bloc, une barrette transversale 62 qui forme butée pour l'ensemble des ergots d'arrêt 28 d'un bloc. Dans le plan de cette barrette, sont formés des évidements 45, 56 en regard du même type que les évidements 41, 51, mais plus petits, qui sont conformés pour recevoir à friction une tige de verrouillage 63. Les ergots d'arrêt 28 se trouvent ainsi immobilisés dans la position appropriée entre la barrette 62 et la tige de verrouillage 63.

On voit que la mise en place des blocs 20 et 30 est extrêmement simple et susceptible d'être automatisée. Grâce à la présence de la barrette 62, les ergots d'arrêt 28 prennent automatiquement la position correcte lorsqu'on introduit le bloc 20 dans le bâti 10, et le montage de la tige de verrouillage 63 fixe ensuite les ergots dans cette position.

On a indiqué plus haut que le bloc totalisateur partiel 30 pouvait être omis. Dans ce cas, les éléments correspondants, notamment l'arbre secondaire 34, seront aussi absents.

## Revendication

Tachymètre à totalisateurs permettant l'affichage de la vitesse d'un véhicule et de la distance parcourue, comprenant un arbre d'entrée (1) entraîné à une vitesse proportionnelle à celle du véhicule, un ensemble tachymétrique relié à l'arbre d'entrée, un bloc totalisateur général (20) constitué par une pluralité de tambours (21) gradués montés côte à côte sur un axe commun et entraînés à partir de l'arbre d'entrée (1), le dit bloc comportant une pluralité d'ergots d'arrêt (28) radialement en saillie, et un bâti (10) pour supporter en rotation le dit bloc, le bâti comprenant deux parois parallèles (40,50) munies d'évidements (41, 51) pour recevoir les extrémités respectives (23) de l'axe du bloc, caractérisé par le fait que le bâti comprend une barette (62) s'étendant entre les dites parois (40, 50) parallélement à l'axe du bloc (20) et formant butée pour les ergots (28) d'arrêt en saillie, et à la barrette (62) est associé un élément de verrouillage (63) pour immobiliser les ergots d'arrêt (28) dans leur position de butée, lequel élément est monté à force dans des évidements (46) formés dans les dites parois (40) du bâti (10).

## Patentanspruch

Tachometer mit Wegstreckenzähler zur Anzeige der Geschwindigkeit eines Fahrzeugs und der zurückgelegten Wegstrecke, mit einer Eingangswelle (1), die mit einer derjenigen des Fahrzeugs proportionalen Geschwindigkeit getrieben wird, einer mit der Eingangswelle verbundenen Geschwindigkeitsmeßeinrichtung, einem Hauptzählerblock (20), der durch mehrere gestufte, nebeneinander auf einer gemeinsamen Achse angeordnete und von der Eingangswelle (1) getriebene Walzen (21) gebildet ist und mehrere radial vorspringende Arretierungsansätze trägt, und mit einem Gehäuse (10) zur drehbaren Lagerung des Blocks, wobei das Gehäuse zwei parallele Wände (140, 50) aufweist, die mit Ausnehmungen (41, 51) zur Aufnahme der jeweiligen Enden (23) der Blockachse versehen sind, dadurch gekennzeichnet, daß das Gehäuse einen Steg (62) aufweist, der sich zwischen den beiden Wänden (40, 50) parallel zur Achse des Blocks (20) erstreckt und einen Anschlag für die vorspringenden Arretierungsansätze (28) bildet, und daß dem Steg (62) ein Verriegelungselement (63) zum Festlegen der Arretierungsansätze (28) in deren Anschlagsstellung zugeordnet ist, wobei das Verriegelungselement in in den Wänden (40) des Gehäuses (10) ausgebildete Ausnehmungen (46) eingerastet ist.

## Claim

Odometer with mileage recording unit adapted to display the speed of a vehicle and the distance travelled, comprising an input shaft (1) driven at a speed proportional to that of the vehicle, a speedometer unit connected to the input shaft, a mileage recording unit (20) comprising a plurality of graduated drums (21) mounted side by side on a common shaft and driven from the input shaft (1), said unit comprising a plurality of radially projecting stop lugs (28), and a frame (10) for supporting said unit in rotation, the frame comprising two parallel walls (40, 50) provided with recesses (41, 51) for receiving the respective ends (23) of the shaft of the unit, characterized in that the frame comprises a bar (62) extending between said walls (40, 50) parallel to the shaft of the unit (20) and providing stop for the projecting stop lugs (28), and there is associated with the bar (62) a locking element (63) for immobilizing the stop lugs (28) in their stop position, which element is force-fitted in recesses (46) formed in said walls (40) of the frame (10).

FIG.1

FIG.2

FIG.3